# FASCICULE DE BREVET EUROPEEN

(11) **EP 4 181 669 B1**
(45) Date de publication et mention de la délivrance du brevet: **26.06.2024**
(21) Numéro de dépôt: 21755519.2
(22) Date de dépôt: 16.07.2021
(51) Int. Cl.: A01K 45/00, A61D 1/02, A61D 7/00, B05B 13/04

(54) **PROCÉDÉ ET APPAREIL POUR DÉLIVRER DES GOUTTELETTES DE FLUIDES SUR UN PLATEAU OUVERT ET FIXE**
VERFAHREN UND VORRICHTUNG ZUR ABGABE VON FLÜSSIGKEITSTRÖPFCHEN AUF EINE OFFENE UND STATIONÄRE SCHALE
METHOD AND APPARATUS FOR DELIVERING FLUID DROPLETS ONTO AN OPEN AND STATIONARY TRAY

(30) Priorité: 17.07.2020 FR 2007531
(43) Date de publication de la demande: 24.05.2023
(73) Titulaire: Desvac, 49124 Saint Barthelemy D'Anjou (FR)
(72) Inventeur: MARS, Julie, 49124 SAINT-BARTHELEMY-D'ANJOU (FR); SCHERDEL, Béatrice, 49124 SAINT-BARTHELEMY D'ANJOU (FR); BOISDON, Olivier, 49124 ST BARTHELEMY D'ANJOU (FR)
(74) Mandataire: Plasseraud IP
(86) Numéro de dépôt international: PCT/FR2021/051334
(87) Numéro de publication internationale: WO 2022/013510

(56) Documents cités:
- CA-A1- 2 427 907
- US-A1- 2004 144 873
- US-A1- 2017 209 250
- US-A1- 2020 170 769

## Description

### Domaine technique

La présente invention concerne un procédé pour délivrer de manière uniforme des gouttelettes de différents fluides sur des volatiles placés dans un plateau ouvert et immobile.

Elle concerne également un appareil pour distribuer des gouttelettes de différents fluides sur un plateau fixe pour la mise en oeuvre de ce procédé.

### Technique antérieure

Afin de faire face à une demande alimentaire en croissance constante, les animaux provenant de systèmes intensifs d'élevage, ont pris une importance accrue.

Une bonne santé de ces animaux, notamment pour garantir des productions adéquates, passe par la prévention et en particulier, par des vaccinations pour immuniser ces animaux contre diverses maladies durant les premiers jours de leur vie.

Par exemple, dans l'élevage de volailles, des vaccins sont typiquement administrés à des poussins à un jour d'âge ou entre un (1) et cinq (5) jours d'âge.

Afin de traiter un grand nombre de poussins simultanément, il est connu d'exposer ces poussins, disposés dans des plateaux, ou paniers, en déplacement sur des convoyeurs, à de fines gouttelettes d'eau contenant le vaccin à administrer, ces gouttelettes étant obtenues par pulvérisation. La mise en contact direct de ces poussins avec le brouillard de gouttelettes assure leur vaccination par voie oculo-nasale.

Il est encore connu de faire passer ces plateaux chargés de poussins, au moyen de convoyeurs, sous des buses éjectant des gouttes de gel contenant un vaccin, ces gouttes adhérentes au contact étant par exemple colorées d'une couleur attractive pour le poussin. Une telle coloration permet également de s'assurer d'une prise correcte du produit par simple contrôle visuel de l'intérieur de la bouche de l'animal.

Les gouttes de gel tombées sur le corps de chaque poussin sont ainsi picorées par d'autres poussins placés à proximité de sorte que chaque poussin reçoit une quantité suffisante de vaccin.

Des supports fixes permettent de supporter chacun un ensemble de buses pour délivrer des gouttelettes d'un fluide spécifique dans une zone de traitement dédiée, ces supports étant agencés pour surplomber les convoyeurs transportant les plateaux chargés de poussins.

Ainsi lorsque des poussins sont destinés à recevoir différents traitements, les plateaux portant ces poussins sont acheminés au moyen de convoyeurs sur différentes zones de traitement espacées les unes des autres.

Ainsi, on constate que les installations permettant la vaccination de masse d'animaux vivants, équipées de tels systèmes de convoyage, sont encombrantes, et requièrent, par conséquent, des espaces d'aménagement étendus.

De telles installations de vaccination de masse d'animaux vivants ne sont donc pas adaptées à tous les types d'exploitation, notamment aux fermes d'élevage de petites dimensions.

Le document US2004/144873 A1 divulgue un appareil et un procédé pour délivrer des gouttelettes de fluide sur un plateau ouvert immobile contenant des volatiles, cet appareil comprenant une surface de travail fixe recevant le plateau, un unique bras comportant une buse de distribution de fluide, une unité d'entraînement à moteur électrique pour déplacer le bras en translation au-dessus du plateau, un circuit d'alimentation en fluide comprenant un réservoir de fluide et une seringue, et une dispositif de contrôle apte à contrôler l'actionnement de la seringue et l'unité d'entraînement du bras.

Il existe donc un besoin pressant pour un équipement de traitement de masse d'animaux vivants, dont la conception originale permette de surmonter les inconvénients de l'art antérieur exposés ci-dessus.

### Objet de l'invention

La présente invention vise à pallier les inconvénients de l'art antérieur en proposant un procédé et un appareil de traitement de masse d'animaux vivants, simples dans leur conception et dans leur mode opératoire, fiables, rapides et demandant un espace réduit pour leur mise en oeuvre.

Un autre objet de la présente invention est un tel procédé et un tel appareil de traitement de masse d'animaux vivants garantissant un traitement homogène de chaque animal vivant contenu dans un plateau ouvert ou panier.

Encore un objet de la présente invention est un tel procédé et un tel appareil minimisant les pertes de fluides de traitement tout en assurant une répartition uniforme et homogène de ces fluides sur un plateau ouvert.

Encore un objet de la présente invention est un tel procédé et un tel appareil permettant de gérer des plateaux ouverts de différentes tailles.

La présente invention vise également l'utilisation de ce procédé et de cet appareil pour administrer en masse deux fluides choisis parmi des substances préventives ou thérapeutiques telles que des vaccins, des substances nutritionnelles ou encore des combinaisons de ces éléments.

### Exposé de l'invention

A cet effet, l'invention concerne un appareil pour délivrer des gouttelettes de fluides sur un plateau ouvert contenant des volatiles, conformément à la revendication 1.

Selon l'invention, cet appareil comprend :
- une surface de travail fixe destinée à recevoir et supporter ce plateau,
- un unique bras portant une pluralité de buses de distribution de fluide,
- une unité d'entraînement à moteur électrique pour déplacer en translation cet unique bras le long d'une première direction du plateau lorsque ce dernier est sur ladite surface de travail, ledit bras se déplaçant au-dessus de ce plateau,

- cette pluralité de buses de distribution étant reliée à au moins un circuit d'alimentation en fluide, chaque circuit d'alimentation en fluide comprenant un réservoir de fluide pour alimenter des buses de distribution correspondantes avec ledit fluide, le volume de fluide prélevé dans ce réservoir étant déterminé par une seringue dont l'entraînement du piston est commandé par un élément de commande électrique, de sorte que ce piston présente une vitesse d'avance V dans la seringue correspondante, et
- un dispositif de contrôle pour commander la vitesse de moteur de l'unité d'entrainement et la vitesse d'avance de piston dans chaque seringue, ce dispositif de contrôle étant configuré pour synchroniser l'accélération/décélération du bras mobile et l'accélération/décélération du piston de ladite ou d'au moins une de ces seringues.

Une telle synchronisation des vitesses de moteur de l'unité d'entrainement et d'avance de piston d'une ou au moins une desdites seringues, autorise avantageusement une accélération et une décélération du bras directement au-dessus du plateau tout en conservant une répartition uniforme des gouttelettes de fluide sur le plateau ouvert.

On minimise ainsi l'espace requis pour le déplacement du bras mobile et, par conséquent, les dimensions de l'appareil, lequel peut, dès lors, être réalisé de manière très compacte.

Notons que cet appareil comprenant plusieurs circuits d'alimentation en fluides alimentant chacun des ensembles de buses de distribution différents, la synchronisation de la vitesse de moteur de l'unité d'entrainement n'est pas nécessairement réalisée avec la vitesse d'avance de piston de chaque seringue de l'appareil.

On pourrait ainsi chercher à décaler dans le temps l'accélération et la décélération de l'avance d'un piston dans une seringue permettant de prélever un fluide dans un réservoir, par rapport à l'accélération et la décélération de la vitesse moteur de l'unité d'entraînement pour ajuster, par exemple, le minutage, ou timing, de distribution de ce fluide par rapport à un autre fluide.

Le plateau présentant une section rectangulaire ou carrée, la première direction est avantageusement la longueur de ce plateau et la seconde direction est la largeur de ce plateau. Bien entendu, des variantes sont possibles.

On entend ici par « volatile », toute espèce aviaire, telle que des oiseaux de la classe des Aves, c'est-à-dire des animaux vertébrés qui sont à plumes, ailés, bipèdes, endothermiques (à sang chaud) et aptes à pondre. Dans le contexte de la présente invention, les volatiles réfèrent plus particulièrement aux oiseaux ayant un intérêt économique et/ou agronomiques, tels que des volailles (par exemple, des poulets, des dindes, des poules, des pintades, des cailles, des perdrix et des pigeons), des oiseaux migrateurs (par exemple, des canards et des oies) et des oiseaux d'ornement (par exemple, des cygnes, des perroquets et des psittacidés).

Un tel appareil de distribution de gouttelettes de fluides trouve des applications notamment dans le domaine de la vaccination de poussins dans les quelques jours suivant leur naissance, soit entre un (1) et cinq (5) jours d'âge, préférentiellement à un (1) jour d'âge, soit 24 heures après éclosion.

Selon un mode de réalisation de cet appareil pour délivrer des gouttelettes de fluides, ce dispositif de contrôle comporte au moins un élément de détection pour détecter la vitesse de moteur de l'unité d'entraînement, ledit au moins un élément de détection émettant des signaux de synchronisation.

A titre purement illustratif, ce moteur électrique étant un moteur pas à pas, un dispositif optique peut être mis en oeuvre pour détecter le nombre de pas réalisés par le moteur.

Ces signaux de synchronisation sont utilisés pour assurer la synchronisation des vitesses moteur de l'unité d'entrainement et d'avance du piston dans la seringue ou au moins une desdites seringues.

Selon un autre mode de réalisation de cet appareil pour délivrer des gouttelettes de fluides, ce dispositif de contrôle est configuré pour définir une durée de déplacement du bras au-dessus dudit plateau comprenant une période d'accélération progressive, une période de vitesse constante et une période de décélération progressive.

Avantageusement, une telle accélération ou décélération progressive évite l'apparition d'à-coups dans le déplacement du bras, lesquels seraient susceptibles d'entraîner des pertes de fluides non souhaitées.

Selon encore un autre mode de réalisation de cet appareil pour délivrer des gouttelettes de fluides, le moteur électrique de l'unité d'entraînement comprend une roue dentée, cette roue dentée s'engrenant dans un chemin de déplacement denté d'un rail de guidage s'étendant le long de la première direction du plateau.

Alternativement, cette unité d'entraînement est un actionneur linéaire commandé par ledit moteur électrique, le bras mobile étant monté perpendiculairement, ou de manière sensiblement perpendiculaire, à l'extrémité libre de cet actionneur.

Selon encore un autre mode de réalisation de cet appareil pour délivrer des gouttelettes de fluides, il est dimensionné de sorte que au moins l'une des dimensions de la surface de travail est au plus égale à la dimension correspondante du plateau ouvert qu'elle est destinée à supporter.

Ainsi, le bras mobile ne se déplace uniquement qu'au-dessus du plateau, y réalisant son accélération et sa décélération.

Selon encore un autre mode de réalisation de cet appareil pour délivrer des gouttelettes de fluides, ce bras porte un premier ensemble de buses de distribution pour distribuer au moins un premier fluide et un second ensemble de buses de distribution pour distribuer au moins un second fluide, distinct du au moins un premier fluide, les buses de distribution de chaque ensemble étant agencées de sorte que l'intégralité de la dimension du plateau selon une seconde direction perpendiculaire à la première direction est couverte par ces premier et second ensembles de buses de distribution, lorsque ce plateau est reçu sur ladite surface de travail.

De manière avantageuse, cet appareil est configuré pour assurer un décalage temporel entre la distribution d'au moins un premier fluide au moyen dudit premier ensemble de buses de distribution et d'au moins un second fluide au moyen dudit second ensemble de buses de distribution. Par exemple, les premier et second ensembles de buses de distribution sont espacés l'un de l'autre sur ledit bras selon la première direction d'une distance définissant ce décalage temporel.

De manière avantageuse, cet espacement est calculé pour garantir un traitement effectif des volatiles par le second fluide.

A titre d'exemple, l'espacement entre les deux (2) ensembles est compris entre 4 et 10cm, préférentiellement entre 4 et 7cm, encore plus préférentiellement l'espacement est de 5cm.

Selon encore un autre mode de réalisation de cet appareil pour délivrer des gouttelettes de fluides, le premier ensemble de buses comprend des buses de distribution par pulvérisation d'un fluide et le second ensemble de buses comprend des buses de distribution par pulvérisation d'un fluide ou des aiguilles pour éjecter des gouttes individuelles d'un fluide.

Tout en étant avantageusement compact, cet appareil permet de délivrer dans un intervalle de temps très court, voire quasi-simultanément, deux fluides distincts tels qu'un spray et un gel, pour traiter en masse des volatiles placés dans un plateau ou panier.

La création d'un décalage temporel entre la distribution des deux fluides permet d'éviter la dilution de gouttes de gel par le brouillard de gouttelettes du premier fluide.

Les buses de distribution par pulvérisation peuvent être à têtes plates ou coniques. Préférentiellement, elles sont plates pour former un rideau de gouttelettes.

Chacune de ces aiguilles est configurée pour éjecter une goutte individuelle de fluide à travers son orifice pour une pression de fluide donnée

Selon encore un autre mode de réalisation de cet appareil pour délivrer des gouttelettes de fluides, il comporte au moins un dispositif optique pour déterminer les dimensions du plateau, le dispositif de contrôle étant configuré pour ajuster le positionnement de ce bras sur une première extrémité de ce plateau, considérée le long de la première direction, avant distribution de ces gouttelettes de fluides.

Selon encore un autre mode de réalisation de cet appareil, il comporte plusieurs capteurs pour déclencher de manière automatique, la distribution des gouttelettes par l'appareil.

Alternativement, ce déclenchement peut être effectué manuellement par l'opérateur.

A titre d'exemple, une ou plusieurs caméras et un programme d'ordinateur pour traiter les images reçues de cette ou de ces caméras, peuvent permettre de détecter le bon positionnement du panier avant déclenchement de l'actionnement du bras mobile.

L'actionnement peut encore être une combinaison entre des capteurs de positionnement et un actionnement manuel par l'opérateur.

Un tel appareil trouve notamment des applications dans le domaine vétérinaire, notamment dans la vaccination de masse de poussins.

La présente invention concerne aussi un procédé pour délivrer des gouttelettes de fluides sur un plateau ouvert contenant des volatiles, ce plateau étant fixe, conformément à la revendication 12.

Selon l'invention,
- un bras mobile est déplacé au-dessus de ce plateau, en translation selon une première direction de ce plateau, ce bras portant une pluralité de buses de distribution de fluide,
- cette pluralité de buses de distribution étant reliée à au moins un circuit d'alimentation en fluide, chaque circuit d'alimentation en fluide comprenant un réservoir de fluide pour alimenter des buses de distribution correspondantes avec ce fluide, le volume de fluide prélevé dans le réservoir étant déterminé par une seringue dont l'entraînement du piston est commandé par un élément de commande électrique, de sorte que ce piston présente une vitesse d'avance V dans la seringue correspondante, la vitesse de déplacement de ce bras mobile est synchronisée avec la vitesse d'avance de piston de ladite ou d'au moins une desdites seringues, et
- l'accélération et la décélération du bras sont réalisées au-dessus dudit plateau pour minimiser la course de déplacement du bras.

Selon un mode de réalisation de ce procédé pour délivrer des gouttelettes de fluides, ce bras portant un premier ensemble de buses de distribution et un second ensemble de buses de distribution, lesdites buses de chaque ensemble étant agencées pour couvrir l'intégralité de la dimension du plateau dans une seconde direction perpendiculaire à la première direction, on distribue simultanément des gouttelettes d'au moins un premier fluide au moyen dudit premier ensemble de buses de distribution et des gouttelettes d'au moins un second fluide, distinct du premier fluide au moyen dudit second ensemble de buses de distribution. Un tel mode de réalisation serait par exemple adapté à la distribution de deux sprays distincts.

De manière alternative, ce bras portant un premier ensemble de buses de distribution et un second ensemble de buses de distribution, les buses de chaque ensemble étant agencées pour couvrir l'intégralité de la dimension du plateau dans une seconde direction perpendiculaire à la première direction, on réalise les étapes suivantes :
a) on distribue tout d'abord des gouttelettes d'au moins un premier fluide par pulvérisation au moyen du premier ensemble de buses de distribution,
b) puis on distribue au moins un second fluide, distinct dudit au moins un premier fluide à pulvériser, par éjection de gouttes individuelles au moyen du second ensemble de buses de distribution.

Ce procédé permet donc d'administrer en très peu de temps au moins deux fluides distincts à des poussins contenus dans un plateau, ou panier, ouvert tout en s'assurant d'un traitement homogène de chaque poussin.

La conception originale de ce procédé requiert un espace réduit pour sa mise en oeuvre et il est donc particulièrement adapté à une mise en oeuvre dans des exploitations de petites dimensions.

Il est avantageusement fiable et économique.

Ce bras mobile étant avantageusement réglable en hauteur, ce procédé peut être mis en oeuvre avec tout type de plateau ouvert. Le réglage en largeur s'effectue par le retrait, le blocage par bouchon, ou la non-utilisation de certaines buses et/ou aiguilles de dépose situées sur les périphéries du bras mobile.

De manière avantageuse, un tel procédé est particulièrement adapté à l'administration d'un spray (un premier fluide) et d'un gel (un second fluide).

De préférence, les étapes a) et b) sont réalisées en un seul passage du bras mobile au-dessus du plateau, ces ensembles de buses étant agencés sur ce bras de manière à générer un décalage temporel entre les étapes a) et b).

De manière avantageuse, le décalage temporel entre les étapes a) et b) est déterminé pour garantir le traitement effectif des volatiles par ledit au moins un second fluide.

On s'assure ainsi que chaque volatile est exposé directement au second fluide ou consomme en quantité suffisante ce second fluide de sorte que le traitement en masse des volatiles est homogène.

En d'autres termes, l'intervalle de temps entre les étapes a) et b) de distribution de fluides est calculé pour éviter que le brouillard de gouttelettes obtenu par distribution du premier fluide au moyen du premier ensemble de buses de distribution ne puisse réduire l'adhésion, ou le mouillage, des gouttes du second fluide éjectées par le second ensemble de buses de distribution, notamment lorsque ce dernier fluide est un gel.

Alternativement, l'étape a) est réalisée lorsque ledit bras se déplace d'un premier bord à un second bord de ce plateau, ce second bord étant opposé au premier bord, sur un chemin aller s'étendant le long de la première direction et l'étape b) est réalisée lorsque ledit bras se déplace du second bord vers le premier bord sur un chemin retour le long de la première direction.

Selon encore un autre mode de réalisation de ce procédé pour délivrer des gouttelettes de fluides sur un plateau ouvert, le premier fluide est un liquide à pulvériser et le second fluide est un gel tel qu'un gel mou, ou un fluide ayant une viscosité comprise entre 50 et 200 cps à 20°C. Préférentiellement, la viscosité de ce fluide est comprise entre 50 et 180 cps à 20°C et encore mieux entre 54 et 177 cps à 20°C. Encore plus préférentiellement, la viscosité est comprise entre 100 et 120 cps à 20°C.

A titre purement illustratif, le premier fluide est une composition aqueuse contenant un vaccin.

Ce gel peut comporter un agent colorant pour contrôler visuellement la répartition uniforme des gouttes sur le plateau ouvert.

Selon encore un autre mode de réalisation de ce procédé pour délivrer des gouttelettes de fluides sur un plateau ouvert, en chacune des étapes a) et b), on forme une pluralité de gouttelettes ayant une taille uniforme ou sensiblement uniforme.

Pour cela, on peut contrôler la pression d'alimentation en fluide au niveau de chaque buse de chaque ensemble pour un type de buse donné.

De préférence, à l'étape a) on forme un brouillard de gouttelettes, au moins 80%, préférentiellement au moins 90% de ces gouttelettes présentant une taille comprise entre 145 microns et 230 microns.

De manière avantageuse, à l'étape b) on forme une pluralité de gouttelettes, au moins 80%, préférentiellement au moins 90%, de ces gouttelettes présentant une taille comprise entre 900 microns et 1500 microns.

Selon encore un autre mode de réalisation de ce procédé pour délivrer des gouttelettes de fluides sur un plateau ouvert, on contrôle le débit au niveau desdites buses et la vitesse de déplacement du bras mobile pour assurer une répartition uniforme ou sensiblement uniforme desdites gouttelettes sur le plateau.

De préférence, le débit au niveau de chacune desdites buses, délivrant le premier fluide, étant compris entre 6mL/sec et 40mL/sec, préférentiellement entre 8mL/sec et 20mL/sec, et le débit au niveau de chacune desdites aiguilles, délivrant le second fluide, étant compris entre 15mL/sec et 50mL/sec, préférentiellement entre 15mL/sec et 25mL/sec. La pression appliquée pour délivrer le premier fluide est comprise entre 3 et 130 bars, et la pression appliquée pour délivrer le second fluide est comprise entre 0,2 et 1 bar.

Selon encore un autre mode de réalisation de ce procédé pour délivrer des gouttelettes de fluides sur un plateau ouvert, lesdits fluides incorporent un ou plusieurs principes actifs pour vacciner des espèces aviaires telles que des oiseaux, ou des fluides autres que des vaccins tels que des compositions nutritionnelles

Selon encore un autre mode de réalisation de ce procédé pour délivrer des gouttelettes de fluides sur un plateau ouvert, on distribue au moins deux premiers fluides distincts par pulvérisation et/ou au moins deux seconds fluides distincts par éjection de gouttes individuelles.

A titre purement illustratif, chaque ensemble de buses de distribution peut comporter deux rampes de buses pour distribuer en un seul passage deux produits différents.

Le présent procédé couvre ainsi également la distribution de deux, ou plus, fluides à pulvériser, ou à atomiser, distincts et/ou de deux, ou plus, fluides à éjecter sous forme de gouttes individuelles. Ces derniers fluides sont éjectés, de préférence, par des aiguilles.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels:
**Fig. 1**

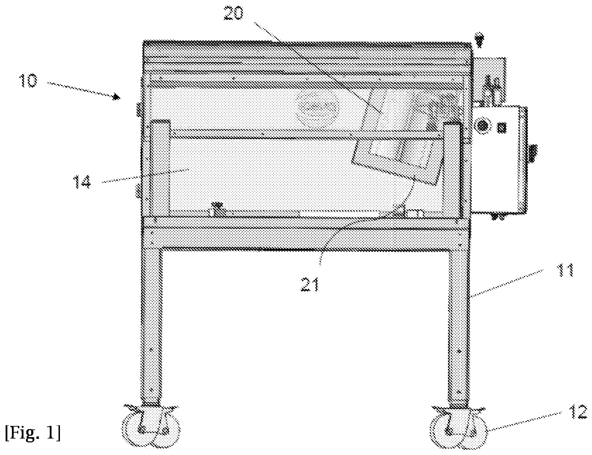

   [Fig. 1] est une vue de face d'un appareil de traitement de masse de poussins selon un mode de réalisation particulier de la présente invention ;
**Fig. 2**

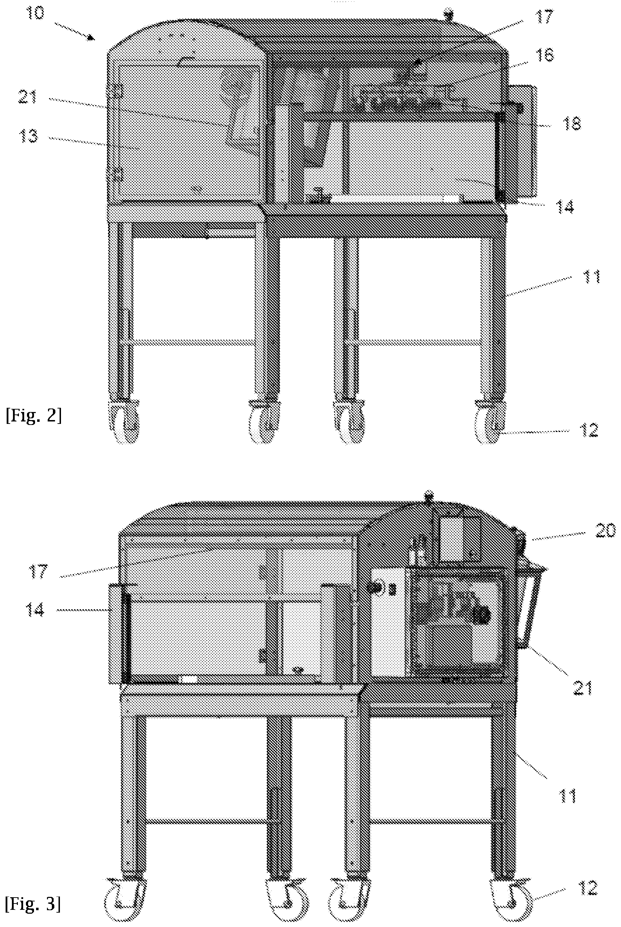

   [Fig. 2] est une vue en perspective de l'appareil de la Fig. 1 ;
**Fig. 3**
   [Fig. 3] est une autre vue en perspective de l'appareil de la Fig. 1 ;
**Fig. 4**

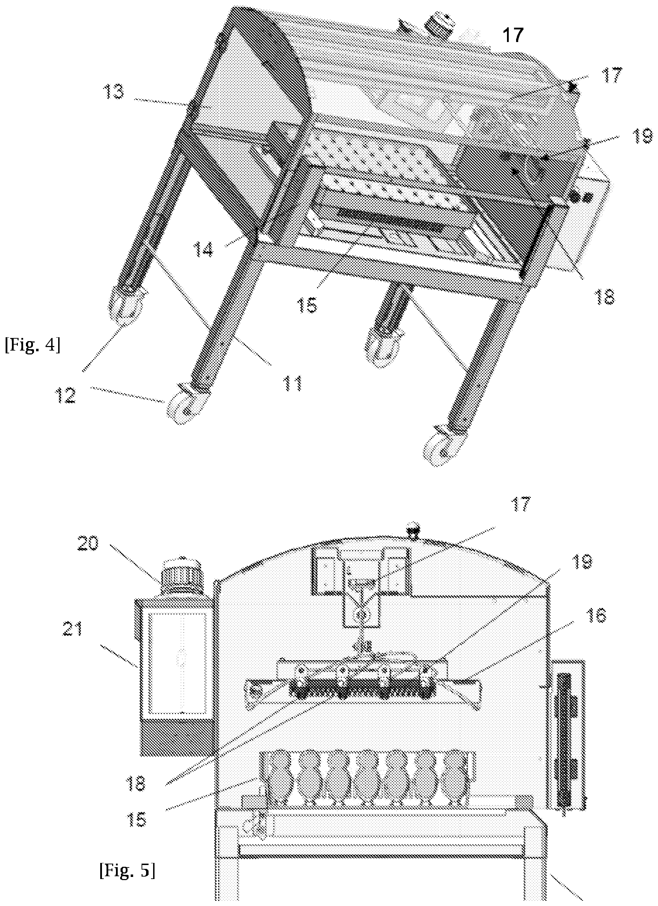

   [Fig. 4] est une vue en perspective et en vue de dessus de l'appareil de la Fig. 1, un panier contenant des poussins étant placé dans sa zone de travail et en attente de traitement ;
**Fig. 5**
   [Fig. 5] est une vue en coupe transversale de l'appareil de la Fig. 1, un panier contenant des poussins étant placé dans sa zone de travail et en attente de traitement ;
**Fig. 6**

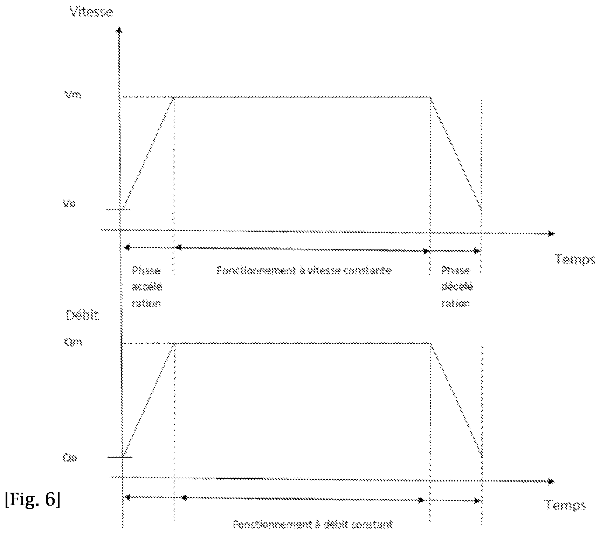

   [Fig. 6] illustre les trois phases de fonctionnement du moteur de l'unité d'entraînement du bras mobile, avec accélération, palier et décélération, et celles identiques de débit de fluide en sortie de chaque seringue de l'appareil de traitement de masse représenté sur les Fig. 1 à 5;

### Description d'un mode de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Les Figures 1 à 5 illustrent de manière schématique un appareil de traitement de masse de poussins selon un mode de réalisation particulier de la présente invention.

Cet appareil comprend un bâti 10 muni de pieds 11 comportant à leur extrémité libre des roulettes 12 pour assurer le déplacement de ce dernier. L'appareil peut comporter de 2 à 4 roulettes 12. Chacune de ces roulettes 12 peut comporter un organe de blocage (non représenté) pour fixer en position l'appareil.

Ce bâti 10 comporte dans sa partie supérieure un espace clos délimité par des parois 13 au moins en partie transparentes pour visualiser l'intérieur de cet espace.

Une de ces parois 13 comporte un volet mobile 14 en translation verticale pour permettre d'accéder à cet espace clos, notamment pour l'introduction et le retrait d'un panier 15 chargé de poussins, également pour le nettoyage et la maintenance de l'appareil.

En plus de cette barrière physique que constitue le volet mobile 14, et s'il est souhaité que l'appareil puisse rester ouvert, cet appareil peut comporter un ou plusieurs éléments de protection (non représentés) pour détecter la présence d'un objet intru dans la zone de traitement tel que la main ou le bras d'un opérateur. Ce ou ces éléments de protection sont aptes à adresser des signaux de détection à une unité de traitement centrale, laquelle peut stopper un traitement en cours ou encore empêcher le déclenchement du traitement. A titre d'exemple, ce ou ces éléments de protection sont des détecteurs par infrarouge.

Bien entendu, il est encore possible que le bâti 10 soit dépourvu d'un tel volet mobile 14 ou encore de tels éléments de protection.

L'intérieur de cet espace clos comprend une zone de travail destinée à recevoir et supporter un panier 15 ouvert pour traitement, ce panier 15 étant alors en position fixe.

Un bras mobile 16 monté sur un rail longitudinal 17 définissant une première direction, peut se déplacer en translation le long de ce rail 17 au-dessus de la zone de travail. Le rail longitudinal 17 est solidaire de l'extrémité supérieure, ou capot, du bâti 10.

Ce bras mobile 16 est entraîné en déplacement par une unité d'entraînement comportant un moteur électrique comprenant une roue dentée, cette roue dentée s'engrenant dans un chemin de déplacement denté du rail longitudinal 17 s'étendant le long de la première direction du panier 15.

Ce bras mobile 16 porte un ensemble de buses 18 et un ensemble d'aiguilles de dépose 19, ces buses et ces aiguilles étant agencées sur le bras mobile 16 de sorte que l'intégralité de la dimension du panier 15 selon une seconde direction perpendiculaire à la première direction définie par le rail longitudinal 17, est intégralement couverte par l'ensemble de buses 18 et par l'ensemble d'aiguilles de dépose 19.

Ces buses et aiguilles peuvent être individuellement mobiles le long du bras mobile 16 pour autoriser un ajustement de la couverture de paniers différents.

Bien entendu, cet appareil peut comporter des capteurs de position (non représentés) pour déterminer le positionnement précis du panier dans la zone de travail. Il est alors possible d'automatiser les séquences de distribution des fluides par reconnaissance automatique du type de panier 15 placé dans l'appareil de distribution.

L'ensemble de buses 18 comprend des buses de distribution par pulvérisation tandis que l'autre ensemble comporte des aiguilles 19 de dépose, chacune de ces aiguilles comprenant un orifice, chaque aiguille étant configurée pour éjecter une goutte individuelle de fluide à travers son orifice pour une pression de fluide donnée.

Tout en étant avantageusement compact, cet appareil permet de délivrer dans un intervalle de temps très court, voire quasi-simultanément, deux fluides distincts tels qu'un spray et un gel pour traiter en masse des volatiles placés dans un panier 15 ouvert.

Cet appareil comporte ainsi deux réservoirs 20 qui sont placés dans un support 21 à hauteur de l'utilisateur, ces réservoirs 20 étant avantageusement transparents pour vérifier le niveau disponible en fluide dans chacun d'entre eux.

Chaque circuit d'alimentation en fluide reliant un réservoir 20 à son ensemble de buses et d'aiguilles de dépose correspondant comprend une seringue 22 permettant de prélever le fluide dans son réservoir correspondant pour l'envoyer dans le circuit d'alimentation. Chaque seringue comprend un piston dont le déplacement est assuré par un moteur électrique. Chaque piston présente ainsi une vitesse d'avance V dans la seringue correspondante.

Les débits d'alimentation des buses et des aiguilles ainsi que la vitesse de déplacement du bras mobile 16 sont contrôlés pour garantir une répartition uniforme et homogène des fluides distribués sur le panier 15 ouvert.

Plus particulièrement, cet appareil comprend un dispositif de contrôle pour commander la vitesse de moteur de l'unité d'entrainement du bras mobile 16 et la vitesse d'avance V de piston dans chaque seringue, ce dispositif de contrôle étant configuré pour synchroniser l'accélération/décélération du bras mobile 16 et l'accélération/décélération du piston de chaque seringue.

Ainsi le débit de chaque fluide dans chaque circuit d'alimentation suit les mêmes phases de fonctionnement que celles du moteur de l'unité d'entrainement du bras mobile, à savoir :
- une première phase de départ et d'accélération,
- une phase de fonctionnement en palier à une vitesse maximale possible Vm, et
- une phase de décélération et d'arrêt du moteur, symétrique à la première phase.

Un tel mode de réalisation permet un déplacement du bras mobile au-dessus du seul panier 15 tout en garantissant une répartition uniforme des gouttelettes sur ce panier ouvert. L'appareil peut dès lors présenter des dimensions réduites.

De manière avantageuse, les phases d'accélération et de décélération sont réalisées progressivement pour éviter tout à-coup dans le déplacement du bras mobile 16.

L'ensemble de buses 18 et l'ensemble d'aiguilles de dépose 19 sont également agencés sur le bras mobile 16 pour assurer un décalage temporel entre la distribution du premier fluide (fluide vaporisable) et du second fluide (gel).

Ce bras mobile 16 allongé comprenant deux bords latéraux définissant une face avant et une face arrière, considérées dans le sens de déplacement en translation de ce bras le long de la première direction, l'ensemble de buses 18 est monté sur la face avant de ce bras mobile 16 tandis que l'ensemble d'aiguilles de dépose 19 est monté sur la face arrière de ce bras mobile 16, en étant donc espacé de l'ensemble de buses 18 le long de la première direction.

On s'assure ainsi que la distribution par pulvérisation, ou encore par atomisation, des gouttelettes du premier fluide par le premier ensemble de buses 18 précède toujours la distribution des gouttes du second fluide par l'ensemble d'aiguilles de dépose 19.

Il n'existe ainsi aucun risque que le brouillard de gouttelettes formé par pulvérisation du premier fluide puisse empêcher l'adhésion des gouttes du second fluide sur les plumes des poussins, ce qui pourrait conduire à un traitement non homogène de ces derniers.

Selon un mode de mise en oeuvre du présent appareil, la distance d minimale séparant spatialement l'ensemble de buses 18 de l'ensemble d'aiguilles de dépose 19, le long de la première direction, est comprise entre 5 et 9 cm. La vitesse de déplacement du bras dans sa plage de déplacement uniforme est comprise entre 35 et 80 cm/seconde, préférentiellement 55 cm/seconde.

## Revendications

1. Appareil pour délivrer des gouttelettes de fluides sur un plateau (15) ouvert contenant des volatiles, **caractérisé en ce qu'**il comprend :
- une surface de travail fixe destinée à recevoir et supporter ce plateau (15),
- un unique bras (16) portant une pluralité de buses de distribution de fluide,
- une unité d'entraînement à moteur électrique pour déplacer en translation cet unique bras (16) le long d'une première direction du plateau (15) lorsque ce dernier est sur ladite surface de travail, ledit bras (16) se déplaçant au-dessus de ce plateau (15),
- cette pluralité de buses de distribution étant reliée à au moins un circuit d'alimentation en fluide, chaque circuit d'alimentation en fluide comprenant un réservoir de fluide pour alimenter des buses de distribution correspondantes avec ledit fluide, le volume de fluide prélevé dans ce réservoir étant déterminé par une seringue dont l'entraînement du piston est commandé par un élément de commande électrique, de sorte que ce piston présente une vitesse d'avance V dans la seringue correspondante, et
- un dispositif de contrôle pour commander la vitesse de moteur de l'unité d'entrainement et la vitesse d'avance de piston dans chaque seringue, ce dispositif de contrôle étant configuré pour synchroniser l'accélération/décélération du bras mobile (16) et l'accélération/décélération du piston de ladite ou d'au moins une de ces seringues.

2. Appareil selon la revendication 1, **caractérisé en ce que** ledit dispositif de contrôle comporte au moins un élément de détection pour détecter la vitesse de moteur de l'unité d'entraînement, ledit au moins un élément de détection émettant des signaux de synchronisation.

3. Appareil selon la revendication 1 ou 2, **caractérisé en ce que** ledit dispositif de contrôle est configuré pour définir une durée de déplacement du bras (16) au-dessus dudit plateau (15) comprenant une période d'accélération progressive, une période de vitesse constante et une période de décélération progressive.

4. Appareil selon l'une quelconque des revendications 1 à 3, **caractérisé en ce que** le moteur électrique de l'unité d'entraînement comprend une roue dentée, cette roue dentée s'engrenant dans un chemin de déplacement denté d'un rail de guidage s'étendant le long de la première direction du plateau (15).

5. Appareil selon l'une quelconque des revendications 1 à 3, **caractérisé en ce que** l'unité d'entraînement est un actionneur linéaire commandé par ledit moteur électrique, ledit bras (16) mobile étant monté perpendiculairement à l'extrémité libre de cet actionneur.

6. Appareil selon l'une quelconque des revendications précédentes, **caractérisé en ce que** ledit appareil est dimensionné de sorte que au moins l'une des dimensions de ladite surface de travail est au plus égale à la dimension correspondante dudit plateau (15) ouvert qu'elle est destinée à supporter.

7. Appareil selon l'une quelconque des revendications précédentes, **caractérisé en ce que** ce bras (16) porte un premier ensemble de buses de distribution (18) pour distribuer au moins un premier fluide et un second ensemble de buses de distribution (19) pour distribuer au moins un second fluide, distinct du au moins un premier fluide, les buses de distribution de chaque ensemble étant agencées de sorte que l'intégralité de la dimension du plateau (15) selon une seconde direction perpendiculaire à la première direction est couverte par ces premier et second ensembles de buses de distribution, lorsque ce plateau (15) est reçu sur ladite surface de travail.

8. Appareil selon la revendication 7, **caractérisé en ce qu'**il est configuré pour assurer un décalage temporel entre la distribution d'au moins un premier fluide au moyen dudit premier ensemble de buses de distribution (18) et d'au moins un second fluide au moyen dudit second ensemble de buses de distribution (19).

9. Appareil selon la revendication 8, **caractérisé en ce que** lesdits premier et second ensembles de buses de distribution (18, 19) sont espacés l'un de l'autre sur ledit bras (16) selon la première direction d'une distance déterminant ledit décalage temporel.

10. Appareil selon l'une des revendications 7 à 9, **caractérisé en ce que** ledit premier ensemble de buses (18) comprend des buses de distribution par pulvérisation d'un fluide et **en ce que** ledit second ensemble de buses (19) comprend des buses de distribution par pulvérisation d'un fluide ou des aiguilles pour éjecter des gouttes individuelles d'un fluide.

11. Appareil selon l'une quelconque des revendications précédentes, **caractérisé en ce qu'**il comporte au moins un dispositif optique pour déterminer les dimensions dudit plateau (15), ledit dispositif de contrôle étant configuré pour ajuster le positionnement dudit bras (16) sur une première extrémité de ce plateau (15) avant distribution desdites gouttelettes de fluide.

12. Procédé pour délivrer des gouttelettes de fluides sur un plateau (15) ouvert contenant des volatiles, ce plateau (15) étant fixe, **caractérisé en ce que** :
- un bras mobile (16) est déplacé au-dessus de ce plateau (15), en translation selon une première direction de ce plateau (15), ce bras (16) portant une pluralité de buses de distribution de fluide,
- cette pluralité de buses de distribution étant reliée à au moins un circuit d'alimentation en fluide non thérapeutique, chaque circuit d'alimentation en fluide comprenant un réservoir de fluide non thérapeutique pour alimenter des buses de distribution correspondantes avec ledit fluide, le volume de fluide prélevé dans ce réservoir étant déterminé par une seringue dont l'entraînement du piston est commandé par un élément de commande électrique, de sorte que ce piston présente une vitesse d'avance V dans la seringue correspondante, la vitesse de déplacement de ce bras mobile (16) est synchronisée avec la vitesse d'avance de piston de ladite ou d'au moins une desdites seringues, et
- l'accélération et la décélération du bras (16) sont réalisées au-dessus dudit plateau (15) pour minimiser la course de déplacement du bras (16).

13. Procédé selon la revendication 12, **caractérisé en ce que** ce bras (16) portant un premier ensemble de buses de distribution (18) et un second ensemble de buses de distribution (19), lesdites buses de chaque ensemble étant agencées pour couvrir l'intégralité de la dimension du plateau (15) dans une seconde direction perpendiculaire à la première direction, on distribue simultanément des gouttelettes d'au moins un premier fluide au moyen dudit premier ensemble de buses de distribution et des gouttelettes d'au moins un second fluide, distinct du premier fluide au moyen dudit second ensemble de buses de distribution.

14. Procédé selon la revendication 12, **caractérisé en ce que** ce bras (16) portant un premier ensemble de buses de distribution (18) et un second ensemble de buses de distribution (19), lesdites buses de chaque ensemble étant agencées pour couvrir l'intégralité de la dimension du plateau (15) dans une seconde direction perpendiculaire à la première direction, on réalise les étapes suivantes :
a) on distribue tout d'abord des gouttelettes d'au moins un premier fluide par pulvérisation au moyen du premier ensemble de buses de distribution (18),
b) puis on distribue au moins un second fluide, distinct dudit au moins un premier fluide à pulvériser, par éjection de gouttes individuelles au moyen du second ensemble de buses de distribution (19).

15. Procédé selon la revendication 14, **caractérisé en ce que** les étapes a) et b) sont réalisées en un seul passage du bras mobile (16) au-dessus dudit plateau (15), ces ensembles de buses étant agencés sur ledit bras de manière à générer un décalage temporel entre les étapes a) et b).

16. Procédé selon la revendication 15, **caractérisé en ce que** le décalage temporel entre les étapes a) et b) est déterminé pour garantir le traitement effectif des volatiles par ledit au moins un second fluide.

17. Procédé selon la revendication 14, **caractérisé en ce que** l'étape a) est réalisée lorsque ledit bras se déplace d'un premier bord à un second bord de ce plateau (15), ce second bord étant opposé au premier bord, sur un chemin aller s'étendant le long de la première direction et l'étape b) est réalisée lorsque ledit bras se déplace du second bord vers le premier bord sur un chemin retour le long de la première direction.

## Patentansprüche

1. Einrichtung zum Abgeben von Flüssigkeitströpfchen auf eine offene Platte (15), die flüchtige Stoffe enthält, **dadurch gekennzeichnet, dass** sie Folgendes umfasst:
- eine fixierte Arbeitsfläche, die dazu bestimmt ist, diese Platte (15) aufzunehmen und zu tragen,
- einen einzelnen Arm (16), der eine Vielzahl von Flüssigkeitsverteilungsdüsen hält,
- eine elektromotorische Antriebseinheit zum translatorischen Bewegen dieses einzelnen Arms (16) in einer ersten Richtung der Platte (15), wenn sich diese auf der Arbeitsfläche befindet, wobei sich der Arm (16) über dieser Platte (15) bewegt,
- wobei diese Vielzahl von Verteilungsdüsen mit mindestens einem Flüssigkeitsversorgungskreislauf verbunden ist, wobei jeder Flüssigkeitsversorgungskreislauf einen Flüssigkeitsbehälter zum Versorgen entsprechender Verteilungsdüsen mit der Flüssigkeit umfasst, wobei das aus diesem Behälter entnommene Flüssigkeitsvolumen durch eine Spritze bestimmt wird, deren Kolbenantrieb durch ein elektrisches Steuerelement gesteuert ist, so dass dieser Kolben in der entsprechenden Spritze eine Vorschubgeschwindigkeit V aufweist, und
- eine Steuervorrichtung zum Steuern der Motordrehzahl der Antriebseinheit und der Vorschubgeschwindigkeit des Kolbens in jeder Spritze, wobei diese Steuervorrichtung so konfiguriert ist, dass sie die Beschleunigung/Verzögerung des beweglichen Arms (16) und die Beschleunigung/Verzögerung des Kolbens der Spritze oder mindestens einer dieser Spritzen synchronisiert.

2. Einrichtung nach Anspruch 1, **dadurch gekennzeichnet, dass** die Steuervorrichtung mindestens ein Erfassungselement zum Erfassen der Motordrehzahl der Antriebseinheit umfasst, wobei das mindestens eine Erfassungselement Synchronisationssignale aussendet.

3. Einrichtung nach Anspruch 1 oder 2, **dadurch gekennzeichnet, dass** die Steuervorrichtung so konfiguriert ist, dass sie eine Bewegungsdauer des Arms (16) über der Platte (15) definiert, die eine Periode zunehmender Beschleunigung, eine Periode konstanter Geschwindigkeit und eine Periode zunehmender Verzögerung umfasst.

4. Einrichtung nach einem der Ansprüche 1 bis 3,
**dadurch gekennzeichnet, dass** der Elektromotor der Antriebseinheit ein Zahnrad umfasst, wobei dieses Zahnrad in eine gezahnte Bewegungsbahn einer entlang der ersten Richtung der Platte (15) verlaufenden Führungsschiene eingreift.

5. Einrichtung nach einem der Ansprüche 1 bis 3,
**dadurch gekennzeichnet, dass** die Antriebseinheit ein durch den Elektromotor gesteuertes Linearstellglied ist, wobei der bewegliche Arm (16) senkrecht zum freien Ende dieses Stellglieds montiert ist.

6. Einrichtung nach einem der vorstehenden Ansprüche,
**dadurch gekennzeichnet, dass** die Einrichtung so bemessen ist, dass mindestens eine der Abmessungen der Arbeitsfläche höchstens gleich der entsprechenden Abmessung der offenen Platte (15) ist, zu deren Tragen sie bestimmt ist.

7. Einrichtung nach einem der vorstehenden Ansprüche,
**dadurch gekennzeichnet, dass** dieser Arm (16) einen ersten Satz von Verteilungsdüsen (18) zum Verteilen mindestens einer ersten Flüssigkeit und einen zweiten Satz von Verteilungsdüsen (19) zum Verteilen mindestens einer zweiten Flüssigkeit, die sich von der mindestens einen ersten Flüssigkeit unterscheidet, hält, wobei die Verteilungsdüsen jedes Satzes so angeordnet sind, dass die gesamte Abmessung der Platte (15) in einer zweiten Richtung senkrecht zur ersten Richtung von diesem ersten und zweiten Satz von Verteilungsdüsen bedeckt ist, wenn diese Platte (15) auf der Arbeitsfläche aufgenommen ist.

8. Einrichtung nach Anspruch 7, **dadurch gekennzeichnet, dass** sie dazu konfiguriert ist, eine zeitliche Verschiebung zwischen der Verteilung mindestens einer ersten Flüssigkeit mittels des ersten Satzes von Verteilungsdüsen (18) und mindestens einer zweiten Flüssigkeit mittels des zweiten Satzes von Verteilungsdüsen (19) sicherzustellen.

9. Einrichtung nach Anspruch 8, **dadurch gekennzeichnet, dass** der erste und der zweite Satz von Verteilungsdüsen (18, 19) auf dem Arm (16) in der ersten Richtung um einen Abstand voneinander beabstandet sind, der die Zeitverschiebung bestimmt.

10. Einrichtung nach einem der Ansprüche 7 bis 9,
**dadurch gekennzeichnet, dass** der erste Düsensatz (18) Düsen zum Verteilen durch Zerstäuben einer Flüssigkeit umfasst und dass der zweite Düsensatz (19) Düsen zum Verteilen durch Zerstäuben einer Flüssigkeit oder Nadeln zum Ausstoßen einzelner Tropfen einer Flüssigkeit umfasst.

11. Einrichtung nach einem der vorstehenden Ansprüche,
**dadurch gekennzeichnet, dass** sie mindestens eine optische Vorrichtung zum Bestimmen der Abmessungen der Platte (15) aufweist, wobei die Steuervorrichtung so konfiguriert ist, dass sie die Positionierung des Arms (16) vor der Verteilung der Flüssigkeitströpfchen auf ein erstes Ende dieser Platte (15) einstellt.

12. Verfahren zum Abgeben von Flüssigkeitströpfchen auf eine offene Platte (15), die flüchtige Stoffe enthält, wobei diese Platte (15) fixiert ist,
**dadurch gekennzeichnet, dass:**
- ein beweglicher Arm (16) über dieser Platte (15) translatorisch in einer ersten Richtung dieser Platte (15) bewegt wird, wobei dieser Arm (16) eine Vielzahl von Flüssigkeitsverteilungsdüsen hält,
- diese Vielzahl von Verteilungsdüsen mit mindestens einem Kreislauf zur Versorgung mit nicht-therapeutischer Flüssigkeit verbunden ist, wobei jeder Flüssigkeitsversorgungskreislauf einen Behälter für nicht-therapeutische Flüssigkeit umfasst, um entsprechende Verteilungsdüsen mit der Flüssigkeit zu versorgen, wobei das aus diesem Behälter entnommene Flüssigkeitsvolumen durch eine Spritze bestimmt wird, deren Kolbenantrieb durch ein elektrisches Steuerelement gesteuert wird, so dass dieser Kolben in der entsprechenden Spritze eine Vorschubgeschwindigkeit V aufweist, wobei die Bewegungsgeschwindigkeit dieses beweglichen Arms (16) mit der Kolbenvorschubgeschwindigkeit der Spritze oder mindestens einer der Spritzen synchronisiert wird, und
- die Beschleunigung und Verzögerung des Arms (16) über der Platte (15) erfolgen, um den Bewegungshub des Arms (16) zu minimieren.

13. Verfahren nach Anspruch 12, **dadurch gekennzeichnet, dass** dieser Arm (16) einen ersten Satz von Verteilungsdüsen (18) und einen zweiten Satz von Verteilungsdüsen (19) hält, wobei die Düsen jedes Satzes so angeordnet sind, dass sie die gesamte Abmessung der Platte (15) in einer zweiten Richtung senkrecht zur ersten Richtung bedecken, es werden gleichzeitig Tröpfchen von mindestens einer ersten Flüssigkeit mittels des ersten Satzes von Verteilungsdüsen und Tröpfchen von mindestens einer zweiten Flüssigkeit, die sich von der ersten Flüssigkeit unterscheidet, mittels des zweiten Satzes von Verteilungsdüsen verteilt.

14. Verfahren nach Anspruch 12, **dadurch gekennzeichnet, dass** dieser Arm (16) einen ersten Satz von Verteilungsdüsen (18) und einen zweiten Satz von Verteilungsdüsen (19) hält, wobei die Düsen jedes Satzes so angeordnet sind, dass sie die gesamte Abmessung der Platte (15) in einer zweiten Richtung senkrecht zur ersten Richtung abdecken, es werden folgende Schritte durchgeführt:
a) zunächst werden mittels des ersten Satzes von Verteilungsdüsen (18) Tröpfchen mindestens einer ersten Flüssigkeit durch Zerstäubung verteilt,
b) dann wird mindestens eine zweite Flüssigkeit, die sich von der mindestens einen ersten, zu zerstäubenden Flüssigkeit unterscheidet, durch Ausstoßen einzelner Tropfen mittels des zweiten Satzes von Verteilungsdüsen (19) verteilt.

15. Verfahren nach Anspruch 14, **dadurch gekennzeichnet, dass** die Schritte a) und b) in einem einzigen Durchgang des beweglichen Arms (16) über der Platte (15) durchgeführt werden, wobei diese Düsensätze so auf dem Arm angeordnet sind, dass sie eine Zeitverschiebung zwischen den Schritten a) und b) erzeugen.

16. Verfahren nach Anspruch 15, **dadurch gekennzeichnet, dass** die Zeitverschiebung zwischen den Schritten a) und b) so bestimmt wird, dass die wirksame Behandlung der flüchtigen Stoffe durch die mindestens eine zweite Flüssigkeit gewährleistet ist.

17. Verfahren nach Anspruch 14, **dadurch gekennzeichnet, dass** Schritt a) ausgeführt wird, wenn sich der Arm von einer ersten Kante zu einer zweiten Kante dieser Platte (15), wobei diese zweite Kante der ersten Kante gegenüberliegt, auf einem Weg bewegt, der sich entlang der ersten Richtung erstreckt, und Schritt b) ausgeführt wird, wenn sich der Arm von der zweiten Kante in Richtung zur ersten Kante auf einem Rückweg entlang der ersten Richtung bewegt.

## Claims

1. Apparatus for delivering droplets of fluids onto an open tray (15) containing poultry, **characterized in that** it comprises:
- a fixed work surface which is intended to receive and support the tray (15),
- a single arm (16) supporting a plurality of fluid dispensing nozzles,
- an electric motor drive unit for translating the single arm (16) in a first direction of the tray (15) when the tray is on said work surface, said arm (16) moving above the tray (15),
- the plurality of dispensing nozzles being connected to at least one fluid supply circuit, each fluid supply circuit comprising a fluid tank for supplying corresponding dispensing nozzles with said fluid, the volume of fluid taken from the tank being determined by a syringe, the driving of the plunger of which is controlled by an electrical control element, such that the plunger has a feed speed V in the corresponding syringe, and
- a monitoring device for controlling the motor speed of the drive unit and the plunger feed speed in each syringe, the monitoring device being configured to synchronize the acceleration/deceleration of the movable arm (16) and the acceleration/deceleration of the plunger of said or at least one of the syringes.

2. Apparatus according to claim 1, **characterized in that** said monitoring device comprises at least one detection element for detecting the motor speed of the drive unit, said at least one detection element emitting synchronization signals.

3. Apparatus according to claim 1 or 2, **characterized in that** said monitoring device is configured to define a duration of movement of the arm (16) above said tray (15) comprising a period of progressive acceleration, a period of constant speed and a period of progressive deceleration.

4. Apparatus according to any one of claims 1 to 3, **characterized in that** the electric motor of the drive unit comprises a gearwheel, the gearwheel meshing in a toothed movement path of a guide rail extending in the first direction of the tray (15).

5. Apparatus according to any one of claims 1 to 3, **characterized in that** the drive unit is a linear actuator controlled by said electric motor, said movable arm (16) being mounted perpendicularly to the free end of the actuator.

6. Apparatus according to any one of the preceding claims, **characterized in that** said apparatus has such dimensions that at least one of the dimensions of said work surface is at most equal to the corresponding dimension of said open tray (15) which it is intended to support.

7. Apparatus according to any one of the preceding claims, **characterized in that** the arm (16) supports a first assembly of dispensing nozzles (18) for dispensing at least one first fluid and a second assembly of dispensing nozzles (19) for dispensing at least one second fluid, which is distinct from the at least one first fluid, the dispensing nozzles of each assembly being arranged such that the entire dimension of the tray (15), in a second direction perpendicular to the first direction, is covered by the first and second assemblies of dispensing nozzles, when the tray (15) is received on said work surface.

8. Apparatus according to claim 7, **characterized in that** it is configured to provide a time lag between the dispensing of at least one first fluid by means of said first assembly of dispensing nozzles (18) and at least one second fluid by means of said second assembly of dispensing nozzles (19).

9. Apparatus according to claim 8, **characterized in that** said first and second assemblies of dispensing nozzles (18, 19) are spaced apart on said arm (16) in the first direction, at a distance which determines said time lag.

10. Apparatus according to one of claims 7 to 9, **characterized in that** said first assembly of nozzles (18) comprises nozzles for spray dispensing a fluid and **in that** said second assembly of nozzles (19) comprises nozzles for spray dispensing a fluid or needles for ejecting individual drops of a fluid.

11. Apparatus according to any one of the preceding claims, **characterized in that** it comprises at least one optical device for determining the dimensions of said tray (15), said monitoring device being configured to adjust the positioning of said arm (16) on a first end of the tray (15) prior to dispensing said fluid droplets.

12. Method for delivering droplets of fluids onto an open tray (15) containing poultry, the tray (15) being fixed, **characterized in that**:
- a movable arm (16) is moved above the tray (15), in translation in a first direction of the tray (15), the arm (16) supporting a plurality of fluid dispensing nozzles,
- the plurality of dispensing nozzles being connected to at least one non-therapeutic fluid supply circuit, each fluid supply circuit comprising a non-therapeutic fluid tank for supplying corresponding dispensing nozzles with said fluid, the volume of fluid taken from the tank being determined by a syringe, the driving of the plunger of which is controlled by an electrical control element, such that the plunger has a feed speed V in the corresponding syringe, the speed of movement of the movable arm (16) is synchronized with the plunger feed speed of said or at least one of said syringes, and
- the acceleration and deceleration of the arm (16) are carried out above said tray (15) to minimize the travel of the arm (16).

13. Method according to claim 12, **characterized in that**, the arm (16) supporting a first assembly of dispensing nozzles (18) and a second assembly of dispensing nozzles (19), said nozzles of each assembly being arranged to cover the entire dimension of the tray (15) in a second direction perpendicular to the first direction, droplets of at least one first fluid are dispensed, by means of said first assembly of dispensing nozzles, simultaneously with droplets of at least one second fluid, which is distinct from the first fluid, being dispensed by means of said second assembly of dispensing nozzles.

14. Method according to claim 12, **characterized in that**, the arm (16) supporting a first assembly of dispensing nozzles (18) and a second assembly of dispensing nozzles (19), said nozzles of each assembly being arranged to cover the entire dimension of the tray (15) in a second direction perpendicular to the first direction, the following steps are carried out:
a) firstly, droplets of at least one first fluid are dispensed by spraying using the first assembly of dispensing nozzles (18),
b) then, at least one second fluid, which is distinct from said at least one first fluid to be sprayed, is dispensed by ejecting individual drops using the second assembly of dispensing nozzles (19).

15. Method according to claim 14, **characterized in that** steps a) and b) are carried out in a single passage of the movable arm (16) above said tray (15), the nozzle assemblies being arranged on said arm so as to generate a time lag between steps a) and b).

16. Method according to claim 15, **characterized in that** the time lag between steps a) and b) is determined to ensure effective treatment of the poultry by said at least one second fluid.

17. Method according to claim 14, **characterized in that** step a) is carried out when said arm moves from a first edge to a second edge of the tray (15), this second edge being opposite the first edge, on a forward path extending in the first direction and step b) is carried out when said arm moves from the second edge to the first edge on a return path in the first direction.
